(19) Europäisches Patentamt
European Patent Office
Office européen des brevets

(11) **EP 4 413 623 B1**

(12) **EUROPEAN PATENT SPECIFICATION**

(45) Date of publication and mention of the grant of the patent:
**30.07.2025 Bulletin 2025/31**

(21) Application number: **22800108.7**

(22) Date of filing: **28.09.2022**

(51) International Patent Classification (IPC):
***H01M 4/131*** ^(2010.01) ***H01M 4/1391*** ^(2010.01)
***H01M 4/505*** ^(2010.01) ***H01M 10/0525*** ^(2010.01)
***H01M 4/525*** ^(2010.01)

(52) Cooperative Patent Classification (CPC):
**H01M 4/131; H01M 4/1391; H01M 4/505; H01M 4/525; H01M 10/0525;** Y02E 60/10

(86) International application number:
**PCT/EP2022/076981**

(87) International publication number:
**WO 2023/057280 (13.04.2023 Gazette 2023/15)**

(54) **PROCESS FOR THE MANUFACTURE OF A COATED CATHODE ACTIVE MATERIAL, AND COATED CATHODE ACTIVE MATERIAL**

VERFAHREN ZUR HERSTELLUNG EINES BESCHICHTETEN KATHODENAKTIVMATERIALS SOWIE BESCHICHTETES KATHODENAKTIVMATERIAL

PROCÉDÉ DE FABRICATION D’UN MATÉRIAU ACTIF DE CATHODE REVÊTU ET MATÉRIAU ACTIF DE CATHODE REVÊTU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.10.2021 EP 21200727**

(43) Date of publication of application:
**14.08.2024 Bulletin 2024/33**

(73) Proprietor: **BASF SE**
**67056 Ludwigshafen am Rhein (DE)**

(72) Inventors:
- **LENNARTZ, Michael**
  **60435 Frankfurt (DE)**
- **GASTEIGER, Hubert**
  **80333 München (DE)**
- **HARTMANN, Louis**
  **80333 München (DE)**
- **CHING, Cheuck Hin**
  **85748 Garching (DE)**

(74) Representative: **BASF IP Association**
**BASF SE**
**GBI - Z078**
**67056 Ludwigshafen (DE)**

(56) References cited:
**CN-A- 105 118 988** **CN-B- 104 779 385**
**US-A1- 2015 380 720**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 413 623 B1

## Description

The present invention is directed towards a process for the manufacture of a cathode active material with a core-shell structure wherein said process comprises the steps of

(a) providing a particulate electrode active material according to general formula $Li_{1+x}TM_{1-x}O_2$, wherein TM is a combination of metals and includes Ni and Mn, and, optionally, at least one element selected from Al, Mg, Ba and transition metals other than Ni and Mn, and x is in the range of from 0.075 to 0.2, wherein at least 50 mole-% of the metal of TM is Mn,
(b) treating said particulate electrode active material with an aqueous buffer solution with a pH value in the range of from 2.0 to 10.5,
(c) removing the liquid phase by a solid-liquid separation method, and
(d) treating the residue from step (c) at a temperature in the range of from 180 to 750°C.

Lithium ion secondary batteries are modern devices for storing energy. Many application fields have been and are contemplated, from small devices such as mobile phones and laptop computers through car batteries and other batteries for e-mobility. Various components of the batteries have a decisive role with respect to the performance of the battery such as the electrolyte, the electrode materials, and the separator. Particular attention has been paid to the cathode materials. Several materials have been suggested, such as lithium iron phosphates, lithium cobalt oxides, and lithium nickel cobalt manganese oxides. Although extensive research has been performed the solutions found so far still leave room for improvement.
Lithiated transition metal oxides are currently used as electrode active materials for lithium-ion batteries. Extensive research and developmental work have been performed in the past years to improve properties like charge density, specific energy, but also other properties like the reduced cycle life and capacity loss that may adversely affect the lifetime or applicability of a lithium-ion battery. Additional effort has been made to improve manufacturing methods.
Many electrode active materials discussed today are of the type of lithiated nickel-cobalt-manganese oxide ("NCM materials") or lithiated nickel-cobalt-aluminum oxide ("NCA materials").
In a typical process for making cathode materials for lithium-ion batteries, first a so-called precursor is being formed by co-precipitating the transition metals as carbonates, oxides or preferably as (oxy)hydroxides. The precursor is then mixed with a lithium compound such as, but not limited to LiOH, $Li_2O$ or $Li_2CO_3$ and calcined (fired) at high temperatures. Lithium compound(s) can be employed as hydrate(s) or in dehydrated form. The calcination - or firing - generally also referred to as thermal treatment or heat treatment of the precursor - is usually carried out at temperatures in the range of from 600 to 1,000 °C. In cases hydroxides or carbonates are used as precursors a removal of water or carbon dioxide occurs first and is followed by the lithi-ation reaction. The thermal treatment is performed in the heating zone of an oven or kiln.
Extensive research has been performed on improvement of various properties of cathode active materials, such as energy density, charge-discharge performance such as capacity fading, and the like. However, many cathode active materials still suffer from limited cycle life and voltage fade. This applies particularly to many Mn-rich cathode active materials.
In EP 3 486 980, specific high-manganese materials with a high energy density retention rate are disclosed. However, the cathode active materials disclosed suffer from a limited energy density as such. In WO 2021/037678, high-manganese cathode active materials with a high energy density are disclosed.
It has been observed, though, that high-manganese cathode active materials suffer from gassing. Said gassing is an evolution of oxygen from the cathode active material and results in the formation of an oxygen-depleted near-surface layer on the electrode. Reactions of the oxygen with the electrolyte may lead to the formation of gasses like CO, $CO_2$ and $H_2$. Said gassing occurs during cycling and may lead to cell bulging as well as capacity fade and voltage fade. T. Teufl et al., J. Electrochem. Soc. 2018, 165, A2718-A2731 describe a process to make a cathode active material with a shell layer of spinel-type compounds. However, the spinel formation usually leads to oxygen liberation in the first charge cycle.
It was therefore an objective of the present invention to provide electrochemical cells and batteries with high energy density retention rate but a reduced tendency of gassing. It was further an objective to provide a process for making cathode active materials that show high energy density retention rate and a reduced tendency of gassing. It was furthermore an objective to provide a process to make cathode active materials with a high energy density retention rate and a reduced tendency of gassing.
Accordingly, the process defined at the outset has been found, hereinafter also referred to as "inventive process". The inventive process comprises at least three steps, step (a), step (b), step (c) and step (d) or, in brief, (a), (b), (c) and (d). Said steps are described in more detail below.
Step (a) includes providing an electrode active material according to general formula $Li_{1+x}TM_{1-x}O_2$ wherein TM is a combination of metals and includes Ni and Mn, and, optionally, at least one element selected from Al, Mg, Ba and

transition metals other than Ni and Mn, and x is in the range of from 0.075 to 0.2, wherein at least 50 mole-% of the metal of TM is Mn, preferably 60 to 85 mole-%. Said cathode active material may also referred to as base cathode active material.

In one embodiment of the present invention, TM is a combination of elements of the general formula (I) $(Ni_aCo_bMn_c)_{1-d}M_d$ (I) wherein

a is in the range of from 0.25 to 0.40,
b being in the range of from zero to 0.15, more preferably, b is zero,
c is in the range of from 0.60 to 0.70, and
d is in the range of from zero to 0.02,

M is selected from Al, Ti, Zr, W, Mo, Mg, and Nb, and combinations of at least two of the foregoing, and

$$a + b + c = 1.$$

Some metals are ubiquitous such as sodium, calcium or zinc and traces of them virtually present everywhere, but such traces will not be taken into account in the description of the present invention. Traces in this context will mean amounts of 0.05 mol-% or less, referring to the total metal content TM.

M may be dispersed homogeneously or unevenly in particles of base cathode active materials provided in step (a). Preferably, M is distributed unevenly, even more preferably as a gradient, with the concentration of M in the outer shell being higher than in the center of the particles.

In one embodiment of the present invention, base cathode active materials provided in step (a) have a specific surface (BET) in the range of from 0.7 to 4.0 $m^2/g$ or even up to 6 $m^2/g$, determined according to DIN-ISO 9277:2003-05, preferred are 1.0 to 3.8 $m^2/g$ or even from 3.0 up to 5.5 $m^2/g$.

In one embodiment of the present invention, base cathode active materials provided in step (a) are comprised of spherical particles, that are particles that have a spherical shape. Spherical particles shall include not just those which are exactly spherical but also those particles in which the maximum and minimum diameter of at least 90% (number average) of a representative sample differ by not more than 10%.

In one embodiment of the present invention, base cathode active materials provided in step (a) are comprised of secondary particles that are agglomerates of primary particles. Preferably, electrode active materials provided in step (a) are comprised of spherical secondary particles that are agglomerates of primary particles. Even more preferably, electrode active materials provided in step (a) are comprised of spherical secondary particles that are agglomerates of platelet primary particles.

In another embodiment of the present invention, base cathode active materials provided in step (a) are so-called monolithic materials. Monolithic materials are also termed single-crystal materials, and they do not exhibit primary particles as described above. Monolithic materials preferably have a slightly irregular shape. Preferably, such monolithic materials have an average particle diameter in the range of from 0.5 to 2.5 μm and a specific surface in the range of from 0.5 to 2.5 $m^2/g$.

In one embodiment of the present invention, said primary particles of electrode active materials provided in step (a) have an average diameter in the range from 1 to 2000 nm, preferably from 10 to 1000 nm, particularly preferably from 50 to 500 nm. The average primary particle diameter can, for example, be determined by SEM or TEM. SEM is an abbreviation of scanning electron microscopy, TEM is an abbreviation of transmission electron microscopy.

In one embodiment of the present invention, base cathode active materials provided in step (a) have a monomodal particle diameter distribution. In an alternative embodiment, inventive cathode active material has a bimodal particle diameter distribution, for example with a maximum in the range of from 3 to 6 μm and another maximum in the range of from 9 to 12 μm.

In one embodiment of the present invention, the pressed density of electrode active materials provided in step (a) is in the range of from 2.75 to 3.1 $g/cm^3$, determined at a pressure of 250 MPa, preferred are 2.85 to 3.10 $g/cm^3$.

Base cathode active materials provided in step (a) may be manufactured according to various methods including but not limited to the method disclosed in WO 2021/037678.

In step (b), base cathode active material provided in step (a) treated with an aqueous buffer solution with a pH value in the range of from 2.0 to 10.5, preferably 4.0 to 9.5. The pH value refers to a temperature of 25°C, and it refers to the beginning of step (b). It is observed that during step (b), the pH value increases.

Examples of suitable buffers are $B(OH)_4^-/B(OH)_3$, pH value 9.2, $H_2PO_4^-/HPO_4^{2-}$ with pH value of 7.2, acetate/acetic acid with a pH value of 4.8, and $H_3PO_4/H_2PO_4^-$ with a pH value of 2.2. The pH value corresponds to a 1:1 by mole aqueous solution at 25°C. Preferred are $B(OH)_4^-/B(OH)_3$, $PO_4^{3-}/HPO_4^{2-}$, and acetate/acetic acid, more preferred are $H_2PO_4^-/HPO_4^{2-}$ and acetate/acetic acid, and even more preferred is $H_2PO_4^-/HPO_4^{2-}$. Counterions may be alkali metal such as lithium, sodium and potassium. In the case of $PO_4^{3-}/HPO_4^{2-}$, potassium is preferred.

In one embodiment of the present invention, step (b) is performed at a temperature in the range of from 25 to

100°C, preferably 50 to 90°C and more preferably 70 to 90°C. Higher temperatures, for example up to 120°C, are feasible as well under elevated pressure, for example at 1.5 to 2 bar.

In one embodiment of the present invention, the buffer solution has a concentration in the range of from 0.1 to 1 M.

In one embodiment of step (b), the volume ratio of base cathode active material provided in step (a) and buffer solution is in the range of from 2:1 to 1:20, preferably 1:1 to 1:5.

In one embodiment of the present invention, step (b) has a duration in the range of from 10 minutes to 10 hours, preferably 20 minutes to 8 hours, more preferably 30 minutes to 4 hours.

Step (b) is preferably supported by mixing operations, for example stirring or tumbling. On laboratory scale, shaking is feasible as well.

A suspension is obtained from step (b), with a solid phase and a liquid phase.

Step (c) includes the liquid phase from the suspension obtained after step (b) by a solid-liquid separation method, for example decantation, with the help of a centrifuge or by filtration.

In one embodiment of the present invention, after or during step (b), liquid phase is removed by any type of filtration, for example on a band filter or in a filter press.

In a preferred embodiment of the present invention, steps (b) and (c) are performed in a filter press or in a filter device with stirrer, for example a pressure filter with stirrer or a suction filter with stirrer. At most 3 minutes after - or even immediately after - having combined starting material and aqueous medium in accordance with step (b), removal of aqueous medium is commenced by starting the filtration. On laboratory scale, steps (b) and (c) may be performed in a centrifuge or on a Büchner funnel, and steps (b) and (c) may be supported by manual stirring.

In a preferred embodiment, step (b) and step (c) are performed in a filter device, for example a stirred filter device that allows stirring of the slurry or of the filter cake in the filter device.

In one embodiment of the present invention, step (c) is performed at a temperature in the range of from 10 to 65°C. Preferred is ambient temperature.

In one embodiment of the present invention, step (c) is a filtration that is supported by pressure, for example a positive pressure in the range of from 1 to 500 mbar. In other embodiments, step (c) is a filtration that is performed by suction.

In one embodiment of the present invention, the liquid phase removal in accordance to step (c) has a duration in the range of from 1 minute to 1 hour.

By performing step (c) a solid residue and a liquid phase are obtained.

In one embodiment of the present invention, the liquid phase obtained from step (c) is at least partially recycled. Said recycling may be performed by adding freshly prepared buffer solution to all or a part, for example in a weight ratio of from 10:1 to 1:10, to liquid phase obtained from step (c) and to then use it in a new batch step (b). It is possible as well to add liquid phase obtained from step (c) to freshly prepared buffer solution, for example in a weight ratio of from 10:1 to 1:10, and to then use it in a new batch step (b).

In step (d), the residue from step (c) is treated at a temperature in the range of from 140 to 750°C, preferably 180 to 300°C.

Step (d) may be performed under air, oxygen, oxygen-enriched air, nitrogen, nitrogen-enriched air or a noble gas, for example argon. Nitrogen and air are preferred. In other embodiments, step (d) is performed *in vacuo.*

In one embodiment of the present invention, step (d) has a duration in the range of from 15 minutes to 24 hours, preferably 1 to 15 hours. A cathode active material is obtained from step (d).

In one embodiment of the present invention, step (d) is carried out under an atmosphere with reduced $CO_2$ content, e.g., a carbon dioxide content in the range of from 0.01 to 500 ppm by weight, preferred are 0.1 to 50 ppm by weight. The $CO_2$ content may be determined by, e.g., by optical methods using infrared light. It is even more preferred to perform step (d) under an atmosphere with a carbon dioxide content below detection limit for example with infrared-light based optical methods.

Step (d) may be carried out in a fluidized bed or in a furnace or oven, for example in a rotary kiln, in a roller hearth kiln or in a pusher kiln.

By performing the inventive process cathode active materials are obtained with a high energy density retention rate but a reduced tendency of gassing. Cathode active materials obtained from the inventive process have a lower relative lithium content than $Li_{1+x}TM_{1-x}O_2$. It can be shown that - if made according to the inventive process - lithium is leached from the electrode active material provided in step (a).

In one embodiment of the present invention, an additional step is performed between steps (c) and (d):
(e) washing the residue from step (c) one to four times with water.

A higher number than 5 washing steps is disadvantageous due to more time consumption and wastewater creation.

Said step (e) is preferably performed at a temperature of the water in the range of from 5 to 50°C, more preferably 10 to 30°C.

In one embodiment of the present invention, the weight ratio treated electrode active material and washing water

per washing step is in the range of from 2:1 to 1:20, preferably 1:1 to 1:15.

Another - optional - step includes drying the solid residue obtained from step (c) or (e), respectively, at a temperature below 140°C, at reduced pressure or *in vacuo,* to remove the major part of the water.

The water used in step (e) is preferably de-ionized, for example by ion exchange or distillation. It is furthermore preferably de-carbonized.

By performing step (e), water-soluble salts can be removed that stem from the buffer and may otherwise dissolve in the electrolyte when a cell is assembled.

By performing thew inventive process, a cathode active material is obtained with excellent properties. Said cathode active material is a material according to general formula $Li_{1+x1}TM_{1-x1}O_2$, wherein TM is a combination of metals and includes Ni and Mn, and, optionally, at least one element selected from Al, Mg, Ba and transition metals other than Ni and Mn, and x1 is in the range of from 0.05 to 0.15, wherein at least 50 mole-% of the metal of TM is Mn, wherein the surface is at least partially covered with a layer of a spinel-like material, wherein said layer may contain phosphate or borate and wherein the content of nickel in said spinel-like material is lower than in TM. Inventive cathode active materials may be described as core-shell materials or partially coated materials with a core and a coating.

The phosphate or borate content, if present, is in a range of from 0.05 to 2 % by weight, referring to the total weight of inventive cathode active material.

Inventive cathode active materials have a lower relative lithium content than $Li_{1+x}TM_{1-x}O_2$. It can be shown that during the inventive process, lithium is leached from the electrode active material provided in step (a). However, preferably, no TM is leached.

The surface of cathode active materials made by the inventive process is at least partially covered with a layer of a spinel-like material, wherein said layer may contain phosphate or borate and wherein the content of nickel in said spinel-like material is lower than in TM. Materials obtained by the inventive process may therefore also be seen as core-shell materials, the shell comprising the spinel-like material with a reduced nickel content and wherein the core has the composition $Li_{1+x}TM_{1-x}O_2$. However, dissolution of TM is advantageously avoided.

In one embodiment of the present invention, the surface of inventive cathode active materials is covered to an extent of 60 to 100% with said spinel-like material. Preferably, 85 to 100% of the particles of a sample of inventive cathode active material are covered by such shell.

In one embodiment of the present invention, the average thickness of the shell is very low, for example 0.1 to 5 nm, preferably 1 to 3 nm. In other embodiments, the thickness may be in the range of from 6 to 15 nm. In further embodiments, the thickness of such shell is in the range of from 16 to 50 nm. A general range may be from 1.5 to 10 nm.

The term "spinel-like" includes a true spinel structure and structures deviating from spinel due to ratio of lithium to metals other than lithium.

In one embodiment of the present invention, the cathode active materials made according to the present invention have a specific surface, hereinafter also "BET surface" in the range of from 1.5 to 8 $m^2$/g. The BET surface may be determined by nitrogen adsorption after outgassing of the sample at 200 °C for 30 minutes or more and beyond this accordance with DIN ISO 9277:2010.

In one embodiment of the present invention, the spinel-like material corresponds to formula $LiTM'_2O_4$ wherein TM' includes metals and is a combination of metals and Ni and Mn, and, optionally, at least one element selected from Al, Mg, Ba and transition metals other than Ni and Mn, and wherein the content of nickel in TM' is lower than in the respective TM from the core by 2 to 6 mol-%, referring to the sum of metals other than lithium.

Further disclosed herein are electrodes comprising at least one electrode active material made according to the present invention. They are particularly useful for lithium ion batteries. Lithium ion batteries comprising at least one electrode made accordingly exhibit a good discharge behavior. Electrodes comprising at least one electrode active material made according to the present invention contain

(A) at least one electrode active material made according to the present invention,
(B) carbon in electrically conductive form,
(C) a binder material, also referred to as binders or binders (C), and, preferably,
(D) a current collector.

In a preferred embodiment, such cathodes contain

(A) 80 to 98 % by weight electrode active material made according to the present invention,
(B) 1 to 17 % by weight of carbon,
(C) 1 to 15 % by weight of binder material,

percentages referring to the sum of (A), (B) and (C).

Electrodes made according to the present invention can comprise further components. They can comprise a

current collector, such as, but not limited to, an aluminum foil. They can further comprise conductive carbon and a binder.

Electrodes made according to the present invention contain carbon in electrically conductive modification, in brief also referred to as carbon (B). Carbon (B) can be selected from soot, active carbon, carbon nanotubes, graphene, and graphite, and from combinations of at least two of the foregoing.

Suitable binders (C) are preferably selected from organic (co)polymers. Suitable (co)polymers, i.e., homopolymers or copolymers, can be selected, for example, from (co)polymers obtainable by anionic, catalytic or free-radical (co)polymerization, especially from polyethylene, polyacrylonitrile, polybutadiene, polystyrene, and copolymers of at least two comonomers selected from ethylene, propylene, styrene, (meth)acrylonitrile and 1,3-butadiene. Polypropylene is also suitable. Polyisoprene and polyacrylates are additionally suitable. Particular preference is given to polyacrylonitrile.

In a particularly preferred embodiment, binder (C) is selected from halogenated (co)polymers, especially from fluorinated (co)polymers. Halogenated or fluorinated (co)polymers are understood to mean those (co)polymers which comprise at least one (co)polymerized (co)monomer which has at least one halogen atom or at least one fluorine atom per molecule, more preferably at least two halogen atoms or at least two fluorine atoms per molecule. Examples are polyvinyl chloride, polyvinylidene chloride, polytetrafluoroethylene, polyvinylidene fluoride (PVdF), tetrafluoroethylene-hexafluoropropylene copolymers, vinylidene fluoride-hexafluoropropylene copolymers (PVdF-HFP), vinylidene fluoride-tetrafluoroethylene copolymers, perfluoroalkyl vinyl ether copolymers, ethylene-tetrafluoroethylene copolymers, vinylidene fluoride-chlorotrifluoroethylene copolymers and ethylene-chlorofluoroethylene copolymers.

Suitable binders (C) are especially polyvinyl alcohol and halogenated (co)polymers, for example polyvinyl chloride or polyvinylidene chloride, especially fluorinated (co)polymers such as polyvinyl fluoride and especially polyvinylidene fluoride and polytetrafluoroethylene.

Inventive cathodes may comprise 1 to 15% by weight of binder(s), referring to electrode active material. In other embodiments, inventive cathodes may comprise 0.1 up to less than 1% by weight of binder(s).

A further aspect of the present invention is a battery, containing at least one cathode comprising electrode active material made according to the present invention, carbon, and binder, at least one anode, and at least one electrolyte.

Embodiments of such cathodes have been described above in detail.

Said anode may contain at least one anode active material, such as lithium, carbon (graphite), $TiO_2$, lithium titanium oxide, silicon or tin. Said anode may additionally contain a current collector, for example a metal foil such as a copper foil.

Said electrolyte may comprise at least one non-aqueous solvent, at least one electrolyte salt and, optionally, additives.

Non-aqueous solvents for electrolytes can be liquid or solid at room temperature and is preferably selected from among polymers, cyclic or acyclic ethers, cyclic and acyclic acetals and cyclic or acyclic organic carbonates.

Examples of suitable polymers are, in particular, polyalkylene glycols, preferably poly-$C_1$-$C_4$-alkylene glycols and in particular polyethylene glycols. Polyethylene glycols can here comprise up to 20 mol-% of one or more $C_1$-$C_4$-alkylene glycols. Polyalkylene glycols are preferably polyalkylene glycols having two methyl or ethyl end caps.

The molecular weight $M_w$ of suitable polyalkylene glycols and in particular suitable polyethylene glycols can be at least 400 g/mol.

The molecular weight $M_w$ of suitable polyalkylene glycols and in particular suitable polyethylene glycols can be up to 5 000 000 g/mol, preferably up to 2 000 000 g/mol.

Examples of suitable acyclic ethers are, for example, diisopropyl ether, di-n-butyl ether, 1,2-dimethoxyethane, 1,2-diethoxyethane, with preference being given to 1,2-dimethoxyethane.

Examples of suitable cyclic ethers are tetrahydrofuran and 1,4-dioxane.

Examples of suitable acyclic acetals are, for example, dimethoxymethane, diethoxymethane, 1,1-dimethoxyethane and 1,1-diethoxyethane.

Examples of suitable cyclic acetals are 1,3-dioxane and in particular 1,3-dioxolane.

Examples of suitable acyclic organic carbonates are dimethyl carbonate, ethyl methyl carbonate and diethyl carbonate.

Examples of suitable cyclic organic carbonates are compounds according to the general formulae (II) and (III)

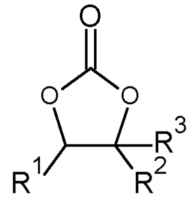

(II)

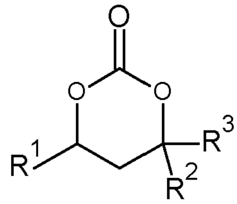

(III)

where $R^1$, $R^2$ and $R^3$ can be identical or different and are selected from among hydrogen and $C_1$-$C_4$-alkyl, for example methyl, ethyl, n-propyl, isopropyl, n-butyl, isobutyl, sec-butyl and tert-butyl, with $R^2$ and $R^3$ preferably not both being tert-butyl.

In particularly preferred embodiments, $R^1$ is methyl and $R^2$ and $R^3$ are each hydrogen, or $R^1$, $R^2$ and $R^3$ are each hydrogen. In another embodiment, $R^1$ is fluorine and $R^2$ and $R^3$ are each hydrogen.

Another preferred cyclic organic carbonate is vinylene carbonate, formula (IV).

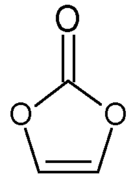

(IV)

The solvent or solvents is/are preferably used in the water-free state, i.e. with a water content in the range from 1 ppm to 0.1% by weight, which can be determined, for example, by Karl-Fischer titration.

Electrolyte further comprises at least one electrolyte salt. Suitable electrolyte salts are, in particular, lithium salts. Examples of suitable lithium salts are $LiPF_6$, $LiBF_4$, $LiClO_4$, $LiAsF_6$, $LiCF_3SO_3$, $LiC(C_nF_{2n+1}SO_2)_3$, lithium imides such as $LiN(C_nF_{2n+1}SO_2)_2$, where n is an integer in the range from 1 to 20, $LiN(SO_2F)_2$, $Li_2SiF_6$, $LiSbF_6$, $LiAlCl_4$ and salts of the general formula $(C_nF_{2n+1}SO_2)_tYLi$, where m is defined as follows:

t = 1, when Y is selected from among oxygen and sulfur,
t = 2, when Y is selected from among nitrogen and phosphorus, and
t = 3, when Y is selected from among carbon and silicon.

Preferred electrolyte salts are selected from among $LiC(CF_3SO_2)_3$, $LiN(CF_3SO_2)_2$, $LiPF_6$, $LiBF_4$, $LiClO_4$, with particular preference being given to $LiPF_6$ and $LiN(CF_3SO_2)_2$.

Batteries made according to the invention comprise one or more separators by means of which the electrodes are mechanically separated. Suitable separators are polymer films, in particular porous polymer films, which are unreactive toward metallic lithium. Particularly suitable materials for separators are polyolefins, in particular film-forming porous polyethylene and film-forming porous polypropylene.

Separators composed of polyolefin, in particular polyethylene or polypropylene, can have a porosity in the range from 35 to 45%. Suitable pore diameters are, for example, in the range from 30 to 500 nm.

In another embodiment of the present invention, separators can be selected from among PET nonwovens filled with inorganic particles. Such separators can have porosities in the range from 40 to 55%. Suitable pore diameters are, for example, in the range from 80 to 750 nm.

Batteries according to the invention further comprise a housing which can have any shape, for example cuboidal or the shape of a cylindrical disk or a cylindrical can. In one variant, a metal foil configured as a pouch is used as housing.

Batteries according to the invention display a good discharge behavior, for example at low temperatures (zero °C or below, for example down to -10 °C or even less), a very good discharge and cycling behavior.

Batteries according to the invention can comprise two or more electrochemical cells that combined with one another, for example can be connected in series or connected in parallel. Connection in series is preferred. In batteries according to the present invention, at least one of the electrochemical cells contains at least one cathode according to the invention. Preferably, in electrochemical cells according to the present invention, the majority of the electrochemical cells contains a cathode according to the present invention. Even more preferably, in batteries according to the present invention all the electrochemical cells contain cathodes according to the present invention.

Batteries according to the invention in appliances, in particular in mobile appliances. Examples of mobile

appliances are vehicles, for example automobiles, bicycles, aircrafts or water vehicles such as boats or ships. Other examples of mobile appliances are those which move manually, for example computers, especially laptops, telephones or electric hand tools, for example in the building sector, especially drills, battery-powered screwdrivers or battery-powered staplers.

The present invention is further illustrated by the following working examples.

Average particle diameters (D50) were determined by dynamic light scattering ("DLS"). Percentages are % by weight unless specifically noted otherwise.

I. Manufacture of inventive cathode active materials

I.1 Manufacture of a base electrode active material, step (a.1)

A stirred tank reactor was filled with deionized water and tempered to 55°C. Then, a pH value of 8.05 was adjusted by adding an aqueous sodium hydroxide solution. The co-precipitation reaction was started by simultaneously feeding an aqueous transition metal sulfate solution and aqueous sodium carbonate solution at a flow rate ratio of 1.3, and a total flow rate resulting in an average residence time of 13.5 hours. The transition metal solution contained Ni and Mn at a molar ratio of 1 : 2 and a total transition metal concentration of 1.65 mol/kg. The aqueous sodium carbonate solution was a 27 wt.% sodium carbonate solution. The pH value was kept at 8.05 by the separate feed of the aqueous sodium carbonate solution. Beginning with the start-up of all feeds, mother liquor was removed continuously. The mixed transition metal (TM) carbonate precursor was obtained by filtration of the resulting suspension, washing with distilled water, drying at 120°C in air and sieving.

The precursor was mixed with $Li_2CO_3$ in a Li/(TM) molar ratio of 1.30. The mixture was heated to 930°C and kept for 5 hours in a forced flow of a mixture of 20% oxygen and 80% nitrogen (by volume). After cooling to ambient temperature, the resultant powder was deagglomerated and sieved through a 32 μm mesh to obtain a base electrode active material resulted, B-CAM.1.

I.2 Treatment with aqueous buffer solutions

I.2.1 Treatment with a $K_2HPO_4/KH_2PO_4$ buffer

Step (b.1): A flask was charged with 5 g of B-CAM.1. A preset amount of buffer with a concentration and temperature according to Table 1 was added. The resultant slurry was stirred for 4 hours. Between start and end of step (b.1), the pH value changed by less than 1.5 units.

Step (c.1): Then, the liquid phase was removed in a centrifuge. A solid residue was obtained.

Step (e.1): The residue obtained from step (d.1) was washed 3 times with 25 ml de-ionized water each. The water was removed by way of centrifuge.

Step (d.1): The residue from step (e.1) was heated to 300°C in vacuo for 12 hours. A cathode active material treated according to the present invention was obtained.

The conditions of separate experiments are summarized in Table 1

Table 1: Conditions of treating with $K_2HPO_4/KH_2PO_4$ buffer

| | $K_2HPO_4/KH_2PO_4$ | Temperature step (b) [°C] | Duration step (b) [h] |
|---|---|---|---|
| CAM.1.1 | 25 ml, 0.056 M | 70 | 4 |
| CAM.1.2 | 25 ml, 0.11 M | 70 | 4 |
| CAM.1.3 | 25 ml, 0.22 M | 70 | 4 |

In a comparative example, $K_2HPO_4/KH_2PO_4$ buffer was replaced by distilled water (25 ml), and washing was performed for 24 hours at 70°C. Steps (c) and (d) were performed as above.

I.2.2 Treatment with a sodium acetate/acetic acid buffer

Step (b.1) may be repeated but with sodium acetate/acetic acid buffer instead. A similar work-up will lead to treated cathode active materials.

II. Electrode manufacture

(B.1): conductive carbon (Super C65, Imerys, Switzerland)
(C.1): polyvinylidene fluoride binder (PVDF, Solef 5130, Solvay, Belgium)

Cathodes were prepared by dispersing 92.5%wt of the respective CAM or B-CAM.1 or comparative cathode active material 4.0%wt, and 3.5%wt in NMP. The respective cathode active materials were weighed in an argon-filled glovebox ($O_2$ and $H_2O$ less than 0.1 ppm, MBraun, Germany). (B.1) and (C.1) were mixed in a planetary mixer (ARV-310, Thinky, USA) at 1000 rpm for 1 × 5 minutes. Afterwards NMP was added in 3 increments under ambient air, and the slurry was mixed again at 2000 rpm for 3 × 5 minutes. To the resulting slurry, the cathode active material was added, and the slurry was mixed for 1 × 5 minutes. The resultant electrode ink was coated onto aluminum foil (thickness 18 μm, MTI Corporation, USA) using a four-edge blade (RK PrintCoat Instruments, UK). Subsequently, the coating was dried in a convection oven (T=55 °C) for at least 3 h to remove the NMP. 14 mm diameter electrodes were punched out, compressed in a KBr-Press with 2.5 tons each, and dried for 12 hours at 120 °C under dynamic vacuum in a glass oven (drying oven 585, Büchi, Switzerland), from where they were transferred into a glovebox (O2 and H2O < 0.1 ppm, MBraun, Germany) without exposure to ambient air. The cathode loading was 8.5 $mg_{CAM/}cm^2$, corresponding to 2.1 $mAh/cm^2$.

Graphite anodes were prepared with graphite (T750, SGL carbon, Germany) and (C.1) at a weight ratio of 95:5. For the ink preparation, graphite and (C.1) were dispersed in NMP and mixed in a planetary mixer (Thinky, USA; at 2000 rpm for 15 minutes). The resultant ink was coated onto copper foil (thickness 12 μm, MTI Corporation, USA). The coating was dried in a convection oven (T=55 °C) for at least 3 h to evaporate the NMP. 15 mm diameter electrodes were punched out, compressed in a KBr-press with 0.5 tons, and dried overnight at 120 °C under dynamic vacuum in a glass oven (drying oven 585, Büchi, Switzerland), from where the samples were transferred into a glovebox ($O_2$ and $H_2O$ < 0.1 ppm, MBraun, Germany) without exposure to ambient air. The anode electrodes with a loading of 6.7 $mg_{graphite}/cm^2$ were oversized in terms of areal capacity (2.4 $mAh/cm^2$, based on a nominal specific capacity of 355 $mAh/g_{graphite}$) compared to the cathode electrodes in order to minimize the risks of Li-plating.

III. Electrochemical testing

Full-cell coin cells (2032-type) were assembled in a glove box using a 17 mm diameter Celgard C2500 separator, sandwiched between the 14 mm diameter cathodes and the 15 mm diameter anodes, and adding 80 μL of electrolyte (1 M LiPF6 in FEC:DEC 2:8 g:g; note that no additive was used here). After assembly, all cells were left for a rest period of 2 h prior to charge/discharge cycling, and C-rates are referenced to a nominal LMR-NCM capacity of 250 mAh/g. The full-cells with LRM-NCM cathodes were activated in the first cycle at a C-rate of C/15 to a full-cell voltage of 4.7 V with a constant-current procedure (CC) and then discharged at C/15 to 2.0 V (CC); in subsequent cycles, the upper cutoff cell voltage was reduced to a full-cell voltage of 4.6 V. Afterwards, 3 cycles with a 0.1 C CC charge and 0.1 C CC discharge were applied.

These initial formation cycles were followed by a rate test for which the cell was charged/discharged for 2 cycles each at 0.3 C (CCCV)/0.5 C (CC), 0.7 C (CCCV)/1 C (CC), 0.7 C (CCCV)/2 C (CC), 0.7 C (CCCV)/3 C (CC) and 0.7 C (CCCV)/1 C (CC) again, whereby all CV-steps were terminated after 1 h or when the current dropped below 0.01 C. After the rate test, a cycle-life test was conducted, starting with 3 cycles at 0.1 C CC charge and 0.1 C CC discharge, followed by 30 cycles at a charge rate of 0.7 C (CCCV) and a discharge rate of 1 C (CC), whereby the CV-step is defined as above. This sequence of 3 slow and 30 fast discharge cycles was repeated several times.

Table 2: Electrochemical full-cell testing

| CAM | $1^{st}$ Discharge capacity [mA·h/g] | $18^{th}$ Discharge capacity [mA·h/g] | $50^{th}$ Discharge capacity [mA·h/g] | $100^{th}$ Discharge capacity [mA·h/g] | Capacity retention (Cyc. 18-100) [%] |
|---|---|---|---|---|---|
| B-CAM.1 | 265 | 210 | 199 | 163 | 76 |
| CAM.1.1 | 260 | 237 | 228 | 213 | 90 |
| CAM.1.2 | 236 | 218 | 217 | 200 | 89 |

## Claims

**1.** Process for the manufacture of a cathode active material with a core-shell structure wherein said process comprises the steps of

(a) providing a particulate electrode active material according to general formula $Li_{1+x}TM_{1-x}O_2$, wherein TM is a combination of metals and includes Ni and Mn, and, optionally, at least one element selected from Al, Mg, Ba and transition metals other than Ni and Mn, and x is in the range of from 0.075 to 0.2, wherein at least 50 mole- % of the metal of TM is Mn,
(b) treating said particulate electrode active material with an aqueous buffer solution with a pH value in the range of from 2.0 to 10.5,
(c) removing the liquid phase by a solid-liquid separation method, and
(d) treating the residue from step (c) at a temperature in the range of from 140 to 750°C.

**2.** Process according to claim 1 wherein TM is a combination of metals according to general formula (I)

$$(Ni_aCo_bMn_c)_{1-d}M_d \qquad (I)$$

with

a being in the range of from 0.25 to 0.4,
b being zero or in the range of from 0.01 to 0.2,
c being in the range of from 0.6 to 0.75, and
d being in the range of from zero to 0.1,
M is at least one of Al, Mg, Ti, Mo, W and Zr, and

$$a + b + c = 1.$$

**3.** Process according to claim 1 or 2 wherein the solid-liquid separation step in step (c) is a filtration.

**4.** Process according to any of the preceding claims wherein the buffer solution in step (b) has a pH value in the range of from 4.0 to 9.5.

**5.** Process according to any of the preceding claims comprising a step (e) after step ( (d): (e) washing the heat-treated material from step (d) one to four times with water.

**6.** Process according to any of preceding claims wherein step (b) is performed at a temperature in the range of from 25 to 90°C.

**7.** Process according to any of the preceding claims wherein the liquid phase obtained from step (c) is at least partially recycled.

## Patentansprüche

**1.** Verfahren zur Herstellung eines Kathodenaktivmaterials mit einer Kern-Schale-Struktur, wobei das Verfahren die Schritte

(a) Bereitstellen eines aktiven Materials mit Partikelelektrode gemäß der allgemeinen Formel $Li_{1+x}TM_{1-x}O_2$, wobei TM eine Kombination von Metallen ist und Ni und Mn umfasst, und gegebenenfalls mindestens ein Element, ausgewählt aus Al, Mg, Ba und anderen Übergangsmetallen als Ni und Mn, und x im Bereich von 0,075 bis 0,2 liegt, wobei mindestens 50 Mol-% des Metalls von TM Mn ist,
(b) Behandlung des aktiven Materials der Partikelelektrode mit einer wässrigen Pufferlösung mit einem pH-Wert im Bereich von 2,0 bis 10,5,
(c) Entfernen der flüssigen Phase durch ein Fest-Flüssig-Trennverfahren und
(d) Behandlung des Rückstands aus Schritt C bei einer Temperatur im Bereich von 140 bis 750 °C.

**2.** Verfahren nach Anspruch 1, wobei TM eine Kombination von Metallen nach der allgemeinen Formel (I) ist

$$(Ni_aCo_bMn_c)_{1-d}M_d \qquad (I)$$

mit

ein Wesen im Bereich von 0,25 bis 0,4,
b Null ist oder im Bereich von 0,01 bis 0,2 liegt,
c im Bereich von 0,6 bis 0,75 liegt und
d im Bereich von Null bis 0,1 liegt,
M mindestens eines von Al, Mg, Ti, Mo, W und Zr ist und

$$a + b + c = 1.$$

3. Verfahren nach Anspruch 1 oder 2, wobei der Fest-Flüssig-Trennschritt in Schritt (c) eine Filtration ist.

4. Verfahren nach einem der vorhergehenden Ansprüche, wobei die Pufferlösung in Schritt (b) einen pH-Wert im Bereich von 4,0 bis 9,5 aufweist.

5. Verfahren nach einem der vorhergehenden Ansprüche, das einen Schritt (e) nach Schritt (d) umfasst:
e) Das wärmebehandelte Material aus Schritt d) wird ein- bis viermal mit Wasser gewaschen.

6. Verfahren nach einem der vorhergehenden Ansprüche, wobei Schritt (b) bei einer Temperatur im Bereich von 25 bis 90 °C durchgeführt wird.

7. Verfahren nach einem der vorhergehenden Ansprüche, wobei die aus Schritt (c) erhaltene flüssige Phase zumindest teilweise recycelt wird.

## Revendications

1. Procédé de fabrication d'un matériau actif de cathode avec une structure noyau-coque, dans lequel ledit procédé comprend les étapes

(a) fournissant un matériau actif d'électrode particulaire selon la formule générale $Li_{1+x}TM_{1-x}O_2$, dans lequel TM est une combinaison de métaux et comprend du Ni et du Mn, et, éventuellement, au moins un élément choisi parmi Al, Mg, Ba et des métaux de transition autres que Ni et Mn, et x est compris entre 0,075 et 0,2, dans lequel au moins 50 % molaire du métal de TM est du Mn,
(b) traiter ledit matériau actif d'électrode particulaire avec une solution tampon aqueuse dont le pH est compris entre 2,0 et 10,5,
(c) l'élimination de la phase liquide par une méthode de séparation solide-liquide, et
(d) traitement du résidu de l'étape (c) à une température comprise entre 140 et 750 °C.

2. Procédé selon la revendication 1, dans lequel TM est une combinaison de métaux selon la formule générale (I)

$$(Ni_aCo_bMn_c)_{1-d}M_d \qquad (I)$$

avec

a étant compris entre 0,25 et 0,4,
b étant nulle ou comprise entre 0,01 et 0,2,
c étant compris entre 0,6 et 0,75, et
d étant dans la gamme de zéro à 0,1,
M est au moins l'une des valeurs suivantes : Al, Mg, Ti, Mo, W et Zr, et

$$a + b + c = 1.$$

3. Procédé selon la revendication 1 ou 2, dans lequel l'étape de séparation solide-liquide de l'étape (c) est une filtration.

4. Procédé selon l'une quelconque des revendications précédentes, dans lequel la solution tampon de l'étape (b) a une valeur de pH comprise entre 4,0 et 9,5.

5. Procédé selon l'une quelconque des revendications précédentes, comprenant une étape (e) après une étape (d):

e) Laver le matériau traité thermiquement de l'étape (d) une à quatre fois avec de l'eau.

**6.** Procédé selon l'une quelconque des revendications précédentes, dans lequel l'étape (b) est réalisée à une température comprise entre 25 et 90°C.

**7.** Procédé selon l'une quelconque des revendications précédentes, dans lequel la phase liquide obtenue à l'étape (c) est au moins partiellement recyclée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3486980 A
- WO 2021037678 A


### Non-patent literature cited in the description


- **T. TEUFL et al.** *J. Electrochem. Soc.*, 2018, vol. 165, A2718-A2731